(19) Europäisches Patentamt
European Patent Office
Office européen des brevets

(11) **EP 1 789 367 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(21) Anmeldenummer: **05791081.2**

(22) Anmeldetag: **14.09.2005**

(51) Int Cl.:
*C01G 23/00* (2006.01)   *C04B 35/465* (2006.01)
*C04B 35/468* (2006.01)   *H01G 4/12* (2006.01)

(86) Internationale Anmeldenummer:
**PCT/EP2005/009868**

(87) Internationale Veröffentlichungsnummer:
**WO 2006/029834 (23.03.2006 Gazette 2006/12)**

(54) **FEINTEILIGE ERDALKALITITANATE UND VERFAHREN ZU DEREN HERSTELLUNG UNTER VERWENDUNG VON TITANOXIDPARTIKELN**

FINE-PARTICLED ALKALINE-EARTH TITANATES AND METHOD FOR THE PRODUCTION THEREOF USING TITAN OXIDE PARTICLES

TITANATES ALCALINOTERREUX EN FINES PARTICULES ET PROCEDE DE PRODUCTION DESDITS TITANATES AU MOYEN DE PARTICULES D'OXYDE DE TITANE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.09.2004 EP 04021822**

(43) Veröffentlichungstag der Anmeldung:
**30.05.2007 Patentblatt 2007/22**

(73) Patentinhaber: **Sachtleben Pigment GmbH**
**47829 Krefeld (DE)**

(72) Erfinder:
• **AUER, Gerhard**
**47800 Krefeld (DE)**
• **SCHUY, Werner**
**47918 Tönisvorst (DE)**
• **RÖTTGER, Anna**
**47798 Krefeld (DE)**
• **VÖLTZKE, Dieter**
**07639 Weissenborn (DE)**
• **SCHWARZ, Harald**
**04319 Leipzig (DE)**
• **ABICHT, Hans-Peter**
**06120 Halle (DE)**

(74) Vertreter: **Nobbe, Matthias et al**
**Demski & Nobbe**
**Patentanwälte**
**Mülheimer Strasse 210**
**47057 Duisburg (DE)**

(56) Entgegenhaltungen:
**EP-A- 0 250 085        EP-A- 0 618 597**
**EP-A- 1 415 955        US-A1- 2003 012 727**
**US-A1- 2004 028 601**

• **PATENT ABSTRACTS OF JAPAN Bd. 1995, Nr. 02, 31. März 1995 (1995-03-31) & JP 06 316414 A (ISHIHARA SANGYO KAISHA LTD), 15. November 1994 (1994-11-15)**
• **FERNANDEZ J F ET AL: "REACTION KINETICS IN THE BARIUM TITANATE (BATIO3) SYNTHESIS: INFLUENCE OF THE TITANIA CRYSTALLINE STRUCTURE AND MORPHOLOGY" MATERIALS SCIENCE MONOGRAPHS, ELSEVIER SCIENTIFIC PUBLISHING, AMSTERDAM, NL, 1991, Seiten 1973-1982, XP009042188 ISSN: 0166-6010**

**Beschreibung**

Die Erfindung betrifft feinteilige Erdalkalititanate, ein Verfahren zu ihrer Herstellung durch Umsetzung von Erdalkalimetallverbindungen mit Titandioxidpartikeln. Weiterhin betrifft die Erfindung ein mikroelektronisches Bauelement, welches ein Erdalkalititanat enthält.

**Stand der Technik:**

Erdalkalititanate, insbesondere $BaTiO_3$, eignen sich wegen ihrer hervorragenden dielektrischen Eigenschaften zur Herstellung von mikroelektronischen Bauelementen wie z.B. keramischen Vielschichtkondensatoren (MLCC).

Erdalkalititanate können durch Synthesemethoden, die über Festkörperreaktionen ablaufen, und durch nasschemische Methoden hergestellt werden.

Hennings (J. Am. Ceram. Soc. 84 (2001) 2777-2782) beschreibt eine Festkörperreaktion zur Herstellung von $BaTiO_3$ aus $TiO_2$ mit einer Partikelgröße von 200 nm durch Kalzinieren mit $BaCO_3$ bei 900 bis 1200 °C. Das auf diese Weise hergestellte $BaTiO_3$ ist allerdings sehr stark agglomeriert mit Kristallitgrößen von 200 nm bis 1 $\mu$m und muss durch Mahlen desintegriert werden.

Aus Untersuchungen zum Bildungsmechanismus über Festkörperreaktionen (A. Beauger, J.C. Mutin, J.C. Niepce, J. Mater. Sci. 18 (1983), 3543-3550; J.C. Niepce, G. Thomas, Solid State Ionics 43 (1990) 69-76; D.F. Hennings, B.S. Schreinemacher, H. Schreinemacher, J. Am. Ceram. Soc. 84 (2001) 2777-2782) ist bekannt, dass die Bildungsreaktion hauptsächlich durch Diffusion von $Ba^{2+}$- und $O^{2-}$-Ionen in die $TiO_2$-Partikel erfolgt, das heißt die Morphologie der $BaTiO_3$-Partikel wird hauptsächlich durch die Morphologie der $TiO_2$-Partikel bestimmt. Andererseits müssen die Barium- und Oxid-Ionen bei solchen Temperaturen vorhanden sein, die einerseits die Diffusion ermöglichen, aber andererseits Kristallwachstumsprozesse der $TiO_2$- bzw. $BaTiO_3$- Partikeln nur in sehr geringem Umfang gestatten.

DE 3635532 (D. Hennings, H. Schreinemacher) offenbart ein nasschemisches Verfahren zur Herstellung von $BaTiO_3$ durch Kopräzipitation von Barium- und Titanverbindungen und anschließendes Kalzinieren. Dieses Verfahren ist sehr aufwändig und teuer, ebenso wie die hydrothermale Herstellung von $BaTiO_3$ aus $Ba(OH)_2$ oder löslichen Ba-Verbindungen und $TiO_2$ unter Verwendung von Mineralisatoren, z.B. KOH, NaOH (J. H. Lee, H.H. Nersiyan, C. W. Won, J. Mater. Sci. 39 (2004) 1397-1401, J. Moon, J. A. Kerchner, H. Karup, J. H. Adair, J. Mater. Res. 14 (1999) 425-435).

In US2004/0028601 A1 wird die Umsetzung von Bariumhydroxid mit feinteiligem Titandioxid beschrieben. Hierbei wird zunächst das Bariumhydroxid-Octahydrat geschmolzen, wobei eine hochkonzentrierte wässrige Lösung von Bariumionen entsteht, die dann mit Titandioxid umgesetzt werden. Hierbei handelt es sich also nicht um eine Festkörperreaktion. Das dabei entstandene kubische BaTiO3 muss deshalb in einem nachfolgenden Schritt durch Kalzinierung in die tetragonale Modifikation überführt werden.

In EP1415955 werden hochreine Bariumtitanate mit einer BET-Oberfläche von mehr als 0,1 und nicht mehr als 9,7 m$^2$/g sowie deren Einsatz in einem dielektrischen keramischen Kondensator offenbart.

EP0250085 offenbart eine Methode, bei der Titandioxid durch Reaktion mit Bariumhydroxid in einem protischen Lösungsmittel bei einer Temperatur von mindestens 100 °C zu Bariumtitanat umgesetzt wird.

In Ferndandez et al. (Fernandez, Jose Francisco; Duran, Pedro; Moure, Carlos: "Reaction kinetics in the barium titanate (BaTiO3 synthesis: influence of the titania crystalline structure and morphology", Materials Science Monographs, 1991, Seiten 1973-1982,(XP009042188)) werden Festkörperreaktionen zwischen Bariumcarbonat und Titandioxid offenbart.

**Zusammenfassung der Erfindung:**

Vor dem Hintergrund dieses Standes der Technik liegt der vorliegenden Erfindung die Aufgabe zu Grunde, feinteilige, hochreine und wirtschaftlich herstellbare Erdalkalititanate sowie ein Verfahren zu ihrer Herstellung unter Verwendung einfacher titanhaltiger Substrate bereitzustellen.

Die Aufgabe wird erfindungsgemäß

gelöst durch ein Verfahren zur Herstellung von Erdalkalititanaten durch Umsetzung von Erdalkalimetallverbindungen mit Titandioxidpartikeln mit einer BET-Oberfläche von mehr als 50 m$^2$/g, wobei die Titandioxidpartikel einen Sulfatgehalt < 1,5 Gew.%, einen Chloridgehalt von < 1000 ppm und einen Kohlenstoffgehalt von < 1000 ppm aufweisen.

Die Aufgabe wird ferner gelöst durch die Bereitstellung eines Erdalkalititanats, welches durch das erfindungsgemäße Verfahren herstellbar ist. Das Erdalkalititanat kann eine BET-Oberfläche von 5 bis 100 m$^2$/g und keine in das Kristallgitter eingebaute Hydroxylgruppen aufweisen.

Die Erfindung umfasst zudem die Bereitstellung eines mikroelektronischen Bauelementes umfassend ein erfindungsgemäßes Erdalkalititanat.

**Abbildungen:**

Abb.1:    Röntgendiffraktogramm von Titanoxidhydrat (BET: 271 m$^2$/g)

Abb.2:    Röntgendiffraktogramm von Bariumtitanat aus Titanoxidhydrat (BET: 271 m$^2$/g) und Ba(OH)$_2$ (kalziniert bei 400°C)

Abb.3:    Thermische Analyse (DSC - differential scanning calorimetry, TG - Thermogravimetrie, DTG - Differenz-TG) des Ausgangsstoffes Ba(NO$_3$)$_2$ (oben) und des Gemenges mit Titanoxidhydrat (unten)

Abb.4:    Röntgendiffraktogramm des Produkts aus gröberem Titanoxid (BET: 6 m$^2$/g) und Ba(OH)$_2$ (kalziniert bei 400°C)

Abb.5:    Spezifischer Widerstand von BaTiO$_3$-Keramiken, gesintert bei 1400 °C, mit unterschiedlichem Kompensationsgrad des Nb mit Al

**Genaue Beschreibung der Erfindung:**

**1.1 Die Titandioxidpartikel**

Die erfindungsgemäß verwendeten Titandioxidpartikel weisen eine BET-Oberfläche von mehr als 50 m$^2$/g, vorzugsweise weniger als 450 m$^2$/g, besonders bevorzugt 200 bis 380 m$^2$/g, insbesondere bevorzugt 250 bis 350 m$^2$/g, auf. Die Bestimmung der BET-Oberfläche erfolgt dabei nach DIN ISO 9277 mittels N$_2$ bei 77 K an einer bei 140 °C während 1 Stunde entgasten und getrockneten Probe aus den Titandioxidpartikeln. Die Auswertung erfolgt über Mehrpunktbestimmung (10-Punkt-Bestimmung).

Die erfindungsgemäß verwendeten Titandioxidpartikel sind regelmäßig Titanoxidhydratpartikel, d.h. die Partikel enthalten chemisorbiertes Wasser und gegebenenfalls H$_2$SO$_4$ und/oder weitere anorganische und/oder organische Bestandteile.

Vorzugsweise enthalten die Titandioxidpartikel 0,4 bis 25 Gew.-%, besonders bevorzugt 2 bis 10 Gew.-%, Wasser.

Der H$_2$SO$_4$-Gehalt der Titandioxidpartikel beträgt vorzugsweise weniger als 1,5 Gew.-%, bevorzugter weniger als 1,0 Gew.%, noch bevorzugter weniger als 0,4 Gew.%, besonders bevorzugt zwischen 0,01 bis 0,3 Gew.-%, insbesondere bevorzugt zwischen 0,01 bis 0,08 Gew.-%, jeweils bezogen auf TiO$_2$.

Die angegebenen und alle nachfolgend aufgeführten Gewichtsprozentangaben der Inhaltsstoffe des Titandioxids beziehen sich auf eine nach ISO 787 Teil 2 getrocknete Probe.

Die Bestimmung des H$_2$O-Gehalts der Titandioxidpartikel kann nach folgender Gleichung erfolgen:

$$\text{H}_2\text{O-Gehalt (\%)} = \text{Glühverlust (\%)} - \text{H}_2\text{SO}_4\text{-Gehalt (\%)}$$

Hierbei ist der Glühverlust der Gewichtsverlust einer nach ISO 787 Teil 2 getrockneten Probe nach einstündigem Glühen bei einer Temperatur von 1000°C. Der H$_2$SO$_4$-Gehalt wird auf Grundlage der analytischen Bestimmung des Schwefelgehalts der nach ISO 787 Teil 2 getrockneten Probe ermittelt. Die Bestimmung des Schwefelgehalts erfolgt durch Verbrennung und gaschromatographische Detektion der Verbrennungsgase mittels Wärmeleitfähigkeitsdetektion (WLD).

Näherungsweise kann der H$_2$O-Gehalt der Titandioxidpartikel auch mit dem Glühverlust nach einstündigem Glühen der nach ISO 787 Teil 2 getrockneten Probe bei 500°C gleichgesetzt werden.

Eine exakte Bestimmung des H$_2$O-Gehalts der Titandioxidpartikel kann beispielsweise durch gaschromatographische Analyse der flüchtigen Bestandteile erfolgen, welche nach einstündigem Glühen bei einer Temperatur von 1000°C einer nach ISO 787 Teil 2 getrockneten Probe entstehen.

Vorzugsweise beträgt der Kohlenstoffgehalt der Titandioxidpartikel weniger als 1000 ppm, besonders bevorzugt weniger als 500 ppm, insbesondere bevorzugt weniger als 50 ppm, bezogen auf TiO$_2$. Die Bestimmung des Kohlenstoffgehalts erfolgt durch Verbrennung und gaschromatographische Detektion der Verbrennungsgase mittels Wärmeleitfähigkeitsdetektion (WLD).

Der Halogenidgehalt der erfindungsgemäß verwendeten Titandioxidpartikel beträgt vorzugsweise weniger als 1000 ppm, besonders bevorzugt weniger als 500 ppm, insbesondere bevorzugt weniger als 50 ppm, bezogen auf TiO$_2$. Insbesondere beträgt der Chloridgehalt der Partikel vorzugsweise weniger als 1000 ppm, insbesondere weniger als 200 ppm, noch bevorzugter weniger als 100 ppm, besonders bevorzugt weniger als 20 ppm, bezogen auf TiO$_2$.

Der Gehalt an Niob der Titandioxidpartikel kann weniger als 2000 ppm, vorzugsweise 10 bis 1000 ppm, vorzugsweise 30 bis 1000 ppm, insbesondere 50 bis 100 ppm, bezogen auf $TiO_2$, betragen.

Der Gehalt an Natrium und/oder Kalium der erfindungsgemäß verwendeten Titandioxidpartikel beträgt vorzugsweise weniger als 200 ppm, bezogen auf $TiO_2$.

Der Gehalt an Eisen der erfindungsgemäß verwendeten Titandioxidpartikel beträgt vorzugsweise weniger als 100 ppm, noch bevorzugter weniger als 30 ppm, besonders bevorzugt weniger als 10 ppm, bezogen auf $TiO_2$.

Die erfindungsgemäß verwendeten Titanoxidpartikel können durch Hydrolyse anorganischer oder organischer Titanverbindungen erhalten werden. Je nach Titanverbindung und Reaktionsbedingungen ergeben sich dabei unterschiedliche Eigenschaften der erhaltenen Titandioxide.

Durch Hydrolyse von Titanylsulfatlösung lassen sich die erfindungsgemäß verwendeten Titanoxidpartikel in guter Qualität und kostengünstig herstellen. Die Titanoxidhydratpartikel können jedoch auch aus Titantetrachlorid oder Titanalkoxid hergestellt werden.

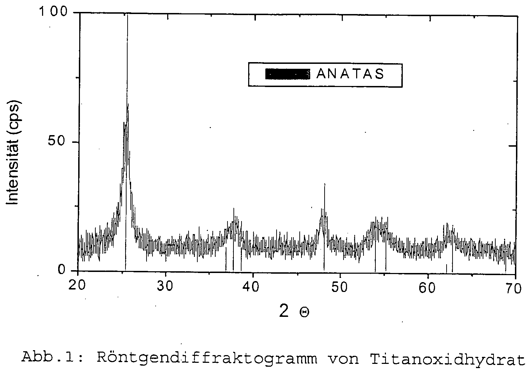

Bei Titanoxidhydrat, welches durch Hydrolyse von Titanylsulfatlösung erhalten wird, liegt eine besonders vorteilhafte Kombination von Eigenschaften vor, nämlich eine hohe spezifische Oberfläche und eine mikrokristalline Anatasstruktur. Diese Anatasstruktur kann aufgrund der breiten Reflexe des Röntgendiffraktogramms (s. Abb. 1) als mikrokristallines Material identifiziert werden.

Vorzugsweise enthalten die erfindungsgemäß verwendeten Partikel daher weniger als 10 Gew.-%, besonders bevorzugt weniger als 1 Gew.-%, Rutil, bezogen auf $TiO_2$. Besonders bevorzugt sind Titandioxidpartikel, die im Röntgendiffraktogramm deutlich eine Anatas-Struktur zeigen.

Die Titanoxidhydratpartikel können beispielsweise durch Hydrolyse einer schwefelsäurehaltigen Titanylsulfatlösung erhalten werden. Je nach Herkunft und Zusammensetzung der schwefelsäurehaltigen Titanylsulfatlösung wird bei der Hydrolyse eine schwefelsaure Suspension von Titanoxidhydrat erhalten, welche noch unerwünschte Verunreinigungen, insbesondere Schwermetalle, enthalten kann. In der Regel werden deshalb ein oder mehrere Reinigungsschritte vorgenommen, um das Titanoxidhydrat von unerwünschten Verunreinigungen zu befreien.

Bevorzugt werden Titanoxidhydratpartikel verwendet, die durch Hydrolyse von Titanylsulfat entstehen, welches beim Herstellungsverfahren für Titandioxid nach dem Sulfatverfahren anfällt. Dieses Verfahren wird beispielsweise in Industrial Inorganic Pigments 3. Auflage, Hrsg. Gunter Buxbaum, Gerhard Pfaff, Wiley-VCH, Weinheim 2005 beschrieben.

Besonders bevorzugt wird dabei das nach der Hydrolyse erhaltene Titanoxidhydrat von anhaftenden Verunreinigungen befreit, indem es filtriert und gewaschen und gegebenenfalls noch zusätzlich dem Verfahrensschritt der so genannten Bleiche, einer chemischen Behandlung mit Reduktionsmitteln zur Eliminierung von 3-wertigem Eisen, unterzogen wird.

Als Reduktionsmittel für die Bleiche eignen sich beispielsweise Aluminium(pulver), Titanhydrid oder Natriumhydroxymethansulfinat-Dihydrat (Handelsbezeichnung: Brüggolith ®).

Die großtechnische Herstellung von Titanoxidhydrat auf Grundlage des Sulfatverfahrens für die Titandioxidherstellung hat weiterhin den Vorteil einer.konstanten Produktqualität und ständigen Verfügbarkeit.

Um eine besonders hohe Reinheit zu erhalten, ist es vorteilhaft, nicht die großtechnische metallionenhaltige schwefelsäurehaltige Titanylsulfatlösung zu verwenden, sondern eine synthetische schwefelsäurehaltige Titanylsulfatlösung, welche nur geringe Mengen an Verunreinigungen enthält. Eine solche Titanylsulfatlösung kann beispielsweise durch Hydrolyse von hochreinem $TiCl_4$ oder Titanestern und Lösen des erhaltenen Präzipitats mit Schwefelsäure hergestellt werden. Die Herstellung eines hochreinen Titanoxidhydrats daraus kann entweder analog zu herkömmlichen großtechnischen Prozessen oder mit spezifischen Abweichungen erfolgen.

Bevorzugt wird die anhaftende Schwefelsäure durch Umsetzung mit einer Base (z.B. NaOH, KOH, $NH_3$) und anschließendes Auswaschen des entstandenen Sulfats entfernt. Gegebenenfalls kann eine nachfolgende Eliminierung der durch die Umsetzung mit der Base eingebrachten Kationen durch Umsetzung mit thermisch leicht zersetzbaren Säuren (z.B. Carbonsäuren oder Salpetersäure) und anschließendes Auswaschen bewerkstelligt werden.

Je nach gewünschter Reinheit können die oben beschriebenen Umsetzungen mehrfach wiederholt werden.

Besonders vorteilhaft bei dem aus Titanylsulfat erhaltenen Titanoxidhydrat sind seine hohe Reinheit bezüglich Eisen, Aluminium und anderer Metalle sowie seine extrem geringen Gehalte an Chlorid und Kohlenstoff.

Es kann vorteilhaft sein, die Titandioxidpartikel durch einen Kalzinier- oder Temperschritt zu behandeln, um die Teilchengröße und Reaktivität gezielt zu modifizieren. Insbesondere kann die Umwandlung von mikrokristallinem Titanoxidhydrat in etwas größere Anatas-Kristallite vorteilhaft sein. Dabei sollte der Kalzinier- oder Temperschritt jedoch so durchgeführt werden, dass die besonderen Eigenschaften des Titanoxidhydrats nicht verloren gehen, d.h. der Anteil an chemisorbiertem Wasser (z.B. in Form von Hydroxylgruppen) sollte nicht kleiner als 0,4 Gew.-%, bevorzugt 2,0 Gew.-%, werden, um ein möglichst reaktives Titanoxidhydrat zu erhalten.

Bei mit hohen Temperaturen kalziniertem Titanoxidhydrat geht die Reaktivität deutlich zurück, während sich das Titanoxidhydrat zu makrokristallinem $TiO_2$ mit einer Kristallgröße von größer als 100 nm in der Anatas- oder Rutilmodifikation mit einem Gehalt an chemisorbiertem Wasser von kleiner als 0,4 Gew.-% umwandelt. Außerdem wird - wie oben bereits erwähnt - durch gröbere titanhaltige Partikel die Ausbildung eines gröberen Erdalkalititanats induziert.

Erfindungsgemäß werden bevorzugt Titanoxidhydratpartikel verwendet, die nach einstündigem Glühen einer nach ISO 787 Teil 2 vorgetrockneten Probe bei einer Temperatur von 1000 °C einen Glühverlust von mehr als 2 Gew.-%, bevorzugt mehr als 6 Gew.-% und/oder die nach einstündigem Glühen bei 500 °C einen Glühverlust von mehr als 0,8 Gew.-%, bevorzugt mehr als 1,2 Gew.-%, aufweisen.

Durch die beschriebenen erfindungsgemäßen Verfahrensschritte, durch die im Vergleich zu herkömmlichen Gasphasenprozessen ein technisch und wirtschaftlich verbesserter Produktionsprozess zur Bildung nanopartikulärer titanoxidhydrathaltiger Materialien zur Verfügung gestellt wird, werden Primärpartikel des Titanoxidhydrats mit einer mittleren Teilchengröße von 3 bis 15 nm, bevorzugt 4 bis 8 nm, erhalten.

Die Primärpartikel sind kleine, näherungsweise kugelförmige, mikrokristalline Partikel mit einer gittergestörten Anatasstruktur. Die Teilchengröße kann durch Berechnung aus der BET-Oberfläche unter Annahme einer monomodalen Korngrößenverteilung von kugelförmigen Partikeln ermittelt werden. Die Beziehung zwischen der mittleren Teilchengröße d und der spezifischen Oberfläche $S_{BET}$ (ermittelt nach BET) ist unter der Voraussetzung einer monomodalen Korngrößenverteilung und kugelförmigen Partikeln durch die Gleichung

$$d_{Partikel} = \frac{6}{\rho \cdot \dot{S}_{BET}}$$

mit $S_{BET}$ in $m^2$/g, $\rho$ = Dichte des Partikels in g/$cm^3$, d in $\mu$m gegeben. Die verwendeten Dichten sind: 6,02 g/$cm^3$ (für BaTiO$_3$), 3,90 g/$cm^3$ (für TiO$_2$ als Titanoxidhydrat oder Anatas), 4,26 g/$cm^3$ (für TiO$_2$ als Rutil).

Bei einer Analyse der Teilchengröße mittels Streulichtmessungen werden dagegen deutlich gröbere Partikelgrößen ermittelt. Die so ermittelten Werte (ca. 0,5 - 1,5 $\mu$m) sind größer als diejenigen von nach dem Stand der Technik verwendetem TiO2 mit ca. 0,25 $\mu$m (s. Vergleichsbeispiel 2).

Es wurde überraschend gefunden, dass die erfindungsgemäß verwendeten Titandioxidpartikel bezüglich ihrer Eignung zur Herstellung von Erdalkalititanaten deutliche Vorteile gegenüber herkömmlichem Titandioxid, wie z.B. handelsübliche technische Titandioxide, aufweisen. So werden vermutlich aufgrund der hohen spezifischen Oberfläche, der geringen Partikelgröße von Titanoxidhydrat und der hohen Reaktivität bei der Umsetzung mit Erdalkaliverbindungen besonders feinteilige Erdalkalititanate erhalten.

Außerdem wirken sich der geringe Chlorid- und Kohlenstoffgehalt der erfindungsgemäßen Titanoxidhydratpartikel positiv auf die Eigenschaften der Erdalkalititanate aus. Der geringe Gehalt an Chlorid und metallischen Spurenelementen wirkt sich günstig auf die elektrischen Eigenschaften der aus Titanoxidhydrat hergestellten Erdalkalititanate aus, während der niedrige Gehalt an Kohlenstoff gewährleistet, dass keine intermediäre Reduktion von TiO$_2$ und keine intermediäre Bildung von Erdalkalicarbonaten erfolgt und deshalb besonders feinteilige Erdalkalititanate erhalten werden können. Insbesondere bei niedrigen Umsetzungstemperaturen zum Erdalkalititanat ist die Anwesenheit von Halogeniden oder Kohlenstoff störend.

## 1.2 Die Erdalkalimetallverbindung

Die Titandioxidpartikel werden erfindungsgemäß mit einer oder mehreren Erdalkalimetallverbindungen umgesetzt. Hierbei handelt es sich in der Regel um Salze eines der Erdalkalimetalle Magnesium, Calcium, Strontium und/oder Barium, ggf. versetzt mit Blei oder Yttrium, und/oder deren Mischungen. Bariumverbindungen zur Herstellung von Bariumtitanat (BaTiO$_3$) sind besonders bevorzugt. Die Salze umfassen Carbonate, Oxalate, Hydroxide, Oxide, Nitrate, Halogenide wie Chloride, wie auch organische Verbindungen wie Alkoxide und Salze von Carbonsäuren, wie z.B. Acetate.

Besonders bevorzugt sind oxidische Erdalkalimetallverbindungen oder Erdalkaliverbindungen, die sich bei einer Temperatur unterhalb von 600°C zersetzen (z.B. unter Bildung von Erdalkalimetalloxid). Unter den Bariumsalzen sind somit Bariumhydroxid, Bariumnitrat sowie andere leicht zersetzliche Bariumverbindungen bzw. Mischungen hiervon besonders bevorzugt. Bariumcarbonat bildet hingegen erst bei höheren Temperaturen (ca. 1000°C) Bariumoxid. Auch Bariumoxalat und Bariumacetat sind weniger bevorzugt, da sie sich zunächst zu Bariumcarbonat zersetzen.

Die Zersetzungstemperaturen können z.B. in kombinierten Thermogravimetrie (TG)- und Differenzthermoanalyse (DTA)-Apparaturen ermittelt werden.

## 1.3 Zur Reaktionsführung

Die vorstehend charakterisierten Titandioxidpartikel werden erfindungsgemäß in einem Verfahren zur Herstellung von Erdalkalititanaten mit den vorstehend genannten Erdalkalimetallverbindungen verwendet. Die Erfindung stellt insbesondere zwei Verfahrensvarianten bereit:

In der ersten erfindungsgemäßen Variante werden die Erdalkalititanate durch Umsetzung von Erdalkalimetallverbindungen mit den wie unter Ziffer 1.1 definierten Titandioxidpartikeln in einer Festkörperreaktion erhalten, wobei die Umsetzung bei Temperaturen unterhalb von 700° C erfolgt. Die Reaktionstemperatur beträgt vorzugsweise 650° C oder weniger, noch bevorzugter 600° C oder weniger. Erfindungsgemäß wird unter einer Festkörperreaktion eine chemische Reaktion zwischen zwei oder mehreren Feststoffen in Abwesenheit eines Lösungsmittels wie z.B. Wasser verstanden. Dies steht im Gegensatz zu nasschemischen und auch hydrothermalen Verfahren, bei denen z.B. zunächst Bariumionen-haltige Lösungen hergestellt werden.

Für die erste erfindungsgemäße Reaktionsvariante kommen insbesondere solche Erdalkalimetallverbindungen in Betracht, die sich bei einer Temperatur unterhalb von 600°C zersetzen (z.B. unter Bildung von Erdalkalimetalloxid). Unter den Bariumsalzen sind somit Bariumhydroxid, Bariumnitrat sowie andere leicht zersetzliche Bariumverbindungen bzw. Mischungen hiervon besonders bevorzugt.

Die minimale Reaktionstemperatur, die für die vollständige Umsetzung zum Titanat erforderlich ist, kann mittels DTA ermittelt werden. Pulverröntgendiffraktometrie (XRD) ist gut geeignet zur Erfassung der Vollständigkeit von Zersetzungsreaktionen. Mit dieser Methode werden kristalline Phasen erfasst und können durch Vergleich mit den Verbindungen in Datenbanken z.B. JCPDS bestimmt werden, die Erfassungsgrenze liegt bei etwa 5 %.

Als vollständige Umsetzung zum Erdalkalititanat wird eine Umsetzung definiert, wenn sowohl im DTA die Umsetzung abgeschlossen ist als auch im XRD keine anderen als die Reflexe (Peaks) der Zielverbindung auftreten. Dabei soll als Abwesenheit anderer Reflexe gelten, wenn kein Fremdreflex mehr als 5% der Intensität des Hauptreflexes der Zielverbindung aufweist.

Die Temperatur der vollständigen Umsetzung ist demzufolge die niedrigste Temperatur, bei der die Umsetzung im Sinne vorstehender Definition vollständig erfolgt ist.

Es ist erfindungsgemäß besonders bevorzugt, die Umsetzung bei maximal 100° C (besonders bevorzugt maximal 50° C) oberhalb dieser minimalen Reaktionstemperatur durchzuführen.

Wird Bariumhydroxid eingesetzt (z.B. das Octahydrat, das Monohydrat, oder kristallwasserfreies Bariumhydroxid), beträgt die Reaktionstemperatur vorzugsweise weniger als 450°C, besonders bevorzugt zwischen 350 und 450°C. Wird Bariumnitrat eingesetzt, beträgt die Reaktionstemperatur vorzugsweise weniger als 650°C, besonders bevorzugt zwischen 550 und 650°C.

Zur Herstellung von Erdalkalititanat (z.B. $BaTiO_3$) können die Titandioxidpartikel und die Erdalkalimetallverbindung (z.B. Bariumnitrat oder Bariumhydroxid) gemeinsam trocken gemahlen und anschließend bei einer Temperatur unterhalb von 700°C (vorzugsweise unterhalb von 600° C) kalziniert werden. Alternativ können die Titandioxidpartikel und die Erdalkalimetallverbindung (z.B. Bariumnitrat oder Bariumhydroxid) gemeinsam nassgemahlen, dann getrocknet und anschließend bei einer Temperatur unterhalb von 700°C (vorzugsweise unterhalb von 600° C) kalziniert werden.

Die Nassmahlung bietet sich besonders an, wenn die Titandioxidpartikel bereits in wässriger Phase (als Suspension) vorliegen. Bevorzugt erfolgt die Nassmahlung mit Rührwerkskugelmühlen wegen des hohen spezifischen Energieeintrags. Zur Vermeidung von unerwünschter Kontamination (insbesondere Si, Fe und Al) des Mahlgutes durch Mahlkörperabrieb kann eine Verwendung von ZrO2-Mahlkörpern vorteilhaft sein.

Bei der Nassmahlung wird nicht in erster Linie die Primärteilchengröße der Titandioxidpartikel, sondern deren Agglomerationszustand verbessert. Insbesondere bei sehr feinteiligen Titandioxid- bzw. Titanoxidhydrat-Primärpartikeln sind diese stark agglomeriert, so dass die effektive Größe der Agglomerate mehr als das Hundertfache der Primärpartikelgröße betragen kann. Die Agglomeratgröße wird üblicherweise mittels Streulichtmessungen (z.B. mit einem Malvern Mastersizer wie im Bereich der Pigmenttechnologie allgemein üblich) bestimmt, während die Primärpartikelgröße elektronenmikroskopisch oder über BET-Oberflächenbestimmungen ermittelt wird.

Besonders vorteilhaft kann die Verwendung von organischen Additiven als Dispergierhilfsmittel sein. Deren Gegenwart - insbesondere während des Mahlschritts - bewirkt eine deutliche Verbesserung der Agglomeratstruktur des Titandioxids.

Bei Verwendung von organischen Dispergieradditiven kann auch eine gegen Sedimentation stabile Suspension erhalten und zur Weiterverarbeitung verwendet werden. Auch die Verwendung von Ultraschall kann den Dispergierzustand weiter verbessern.

Besonders bevorzugt wird eine wasserlösliche Bariumverbindung oder eine wässrige Bariumsalzlösung zu einer wässrigen Suspension von Titanoxidhydrat gegeben und diese Suspension getrocknet. Die Dispergierung kann unter Einfluss von Ultraschall erfolgen. Dabei wird ein Titanoxidhydrat erhalten, auf dessen Oberfläche die Erdalkaliverbindung gleichmäßig verteilt ist. Das so erhaltene und mit der Erdalkalimetallverbindung beschichtete Titanoxidhydrat kann anschließend der Festkörperreaktion unterworfen werden, z.B. kalziniert werden.

Die Trocknung erfolgt bevorzugt mittels Sprühtrocknung. Auf diese Weise werden eine homogene Verteilung der Komponenten und besonders gut redispergierbare Trocknungsagglomerate erhalten. Alternativ kann die Trocknung am Rotationsverdampfer oder durch Gefriertrocknung erfolgen.

Die Erfindung stellt somit auch eine pulverförmige Zubereitung enthaltend Titanoxidpartikel mit einer BET-Oberfläche von mehr als 50 m$^2$/g und eine wasserlösliche Erdalkaliverbindung bereit, wobei das Molverhältnis von Titan und Erdalkalimetall zwischen 0,95 und 1,05 liegt. Bevorzugt liegt eine solche Zubereitung in getrockneter Form vor. Bei der Herstellung dieser Zubereitung als Zwischenprodukt für das Titanat können gegebenenfalls Dotierungsverbindungen zugegeben werden. Daraus durch Kalzinierung erhältliche halbleitend dotierte Erdalkalititanate sind die wesentlichen Bestandteile von temperaturabhängigen Widerständen.

Es ist auch möglich, die Trocknung und Kalzinierung in einem einzigen Verfahrensschritt durchzuführen.

Die Kalzinierung der Titandioxidpartikel mit der Erdalkalimetallverbindung erfolgt vorzugsweise nicht isotherm, sondern bei näherungsweise konstanter Umwandlungsrate zum Erdalkalititanat (SCRT-Methode, beschrieben in Gotor et al., J.Europ.Cer.Soc.23 (2003), 505-513).

Es hat sich zudem überraschend gezeigt, dass eine Kalzinierung bei einer Temperatur möglich ist, die unterhalb der Zersetzungstemperatur der reinen Erdalkalimetallverbindung zum Oxid liegt. Im Hinblick auf die Feinheit des erhaltenen Titanats ist es erfindungsgemäß möglich, die Kalzinierung bei einer Temperatur durchzuführen, die im Bereich von 50 °C bis 200 °C unterhalb der Zersetzungstemperatur der verwendeten Erdalkalimetallverbindung zum Oxid liegt.

Im Anschluss an die Kalzinierung kann das Erdalkalititanat durch Mahlen, z.B. Perlmahlung, weiter zerkleinert bzw. deagglomeriert werden.

Besonders vorteilhaft bei den durch das erfindungsgemäße Verfahren ermöglichten niedrigen Kalzinierungstemperaturen ist die geringe Versinterung der erhaltenen Erdalkalititanatpartikel. Deshalb lassen sich die bei niedrigen Temperaturen kalzinierten Erdalkalititanatpartikel besonders leicht vermahlen bzw. es kann auf eine Vermahlung vor der Weiterverarbeitung unter Umständen sogar gänzlich verzichtet werden.

In der zweiten erfindungsgemäßen Reaktionsvariante erfolgt die Herstellung von Erdalkalititanaten durch Umsetzung von Erdalkalimetallverbindungen mit Titandioxidpartikeln mit einer BET-Oberfläche von mehr als 50 m$^2$/g, wobei die Titandioxidpartikel einen Sulfatgehalt < 1,5 Gew.%, einen Chloridgehalt von < 1000 ppm und einen Kohlenstoffgehalt von < 1000 ppm aufweisen. Im Gegensatz zur ersten Reaktionsvariante können hier auch Erdalkalimetallverbindungen zum Einsatz kommen, die erst oberhalb von 600° C oder gar 700° C mit den Titandioxidpartikeln eine Festkörperreaktion eingehen, wie z.B. Bariumcarbonat oder Bariumoxalat. Weiterhin erfolgt die Umsetzung nicht zwingend in der bzgl. der ersten Reaktionsvariante beschriebenen Festkörperreaktion, sondern sie kann auch nasschemisch oder hydrothermal erfolgen.

So können gemäß dieser Variante die Titandioxidpartikel mit einer wasserlöslichen Erdalkalimetallverbindung (z.B. Bariumnitrat oder Bariumhydroxid) zu Erdalkalititanat (z.B. BaTiO$_3$) umgesetzt werden, wobei die Partikel in der bereits hergestellten Ba$^{2+}$-haltigen Lösung oder zusammen mit dem Ba-Salz in Wasser suspendiert, anschließend das Lösungsmittel verdampft und das Gemenge unterhalb 600 °C kalziniert wird.

Das Erdalkalititanat kann auch unter hydrothermalen Bedingungen direkt durch Umsetzung der Titandioxidpartikel mit einer Erdalkaliverbindung erhalten werden. So kann eine Ba(OH)2-Lösung bei pH>13, einer Temperatur von größer oder gleich 100 °C über eine Zeit von vorzugsweise mindestens 1 Stunde in einem Autoklaven mit den Titandioxidpartikeln umgesetzt werden, wobei direkt Bariumtitanat erhalten wird. Für die hydrothermale Reaktionsvariante ist ein geringer Sulfatgehalt von besonderer Wichtigkeit, da bei dieser Reaktionsvariante die Bildung des Erdalkalititanats über lösliche Zwischenstufen erfolgt und somit die Anwesenheit von Sulfat zur Bildung von Erdalkalisulfaten führt.

In beiden Reaktionsvarianten werden die Mengenverhältnisse Erdalkaliverbindung / Titandioxidpartikel durch exakte Einwaage eingestellt. Das molare Verhältnis Ba:Ti kann dabei entsprechend der konkreten Anwendungsanforderung des Bariumtitanates von 1 abweichen.

Von Vorteil für die Eigenschaften des nach den vorliegenden erfindungsgemäßen Verfahren hergestellten Erdalkalititanats ist es insbesondere, wenn das Molverhältnis von Niob zu Aluminium in dem Erdalkalititanat 0,5 bis 1,5, bevorzugt 0,8 bis 1,2, beträgt, welches gegebenenfalls durch Zugabe einer entsprechenden Menge einer Aluminiumverbindung herbeigeführt werden kann. Ein solches Material zeichnet sich durch besonders gute elektrische Eigenschaften (z.B. niedrige Leitfähigkeit) aus.

Als Dotierungsverbindungen können z.B. La-, Y-, Nb- oder Sb-Salze in Größenordnungen von 0,05 bis 1,0 mol% bezogen auf BaTiO$_3$ zugegeben werden.

Bei Verwendung von Erdalkaliverbindungen mit hoher Zersetzungstemperatur wird der Vorteil der Feinteiligkeit der Titankomponente nicht optimal genutzt: Bei den zur Zersetzung der Erdalkaliverbindung notwendigen Temperaturen hat bereits eine Versinterung und Vergröberung der Titankomponente stattgefunden. Dennoch kann auch bei Verwendung von erst bei hohen Temperaturen sich zersetzenden Erdalkaliverbindungen (wie z.B. Erdalkalicarbonaten) durch feinteilige Titankomponenten eine gewisse Verbesserung der Feinteiligkeit der Erdalkalititanate erreicht werden (siehe auch Hennings (J. Am. Ceram. Soc. 84 (2001) 2777-2782)).

Dies gilt insbesondere, wenn die Erdalkalicarbonate zusammen mit der Titankomponente nassgemahlen werden, wodurch sehr homogene und reaktive Mischungen entstehen.

**1.4 Das Erdalkalititanat**

Die Erfindung stellt ein Erdalkalititanat bereit, das gemäß dem erfindungsgemäßen Verfahren erhältlich ist.

Die erfindungsgemäß erhaltenen Erdalkalititanate weisen bevorzugt eine BET-Oberfläche von 5 bis 100 m$^2$/g, besonders bevorzugt 20 bis 60 m$^2$/g, auf.

Die erfindungsgemäß erhaltenen Erdalkalititanate weisen bevorzugt in ungemahlenem Zustand eine BET-Oberfläche von mehr als 5 bis 50 m$^2$/g, besonders bevorzugt 15 bis 40 m$^2$/g, auf. Durch elektronenmikroskopische Aufnahmen kann der Fachmann in der Regel zwischen gemahlenen und ungemahlenen Pulvern unterscheiden. Ein weiteres Kriterium zur Unterscheidung von gemahlenen und ungemahlenen Pulvern ist das Verhältnis der mittleren Teilchengrößen, die aus der BET-Oberfläche und

einer Streulichtbestimmung der Partikelgröße erhalten wird: Bei gemahlenen und desagglomerierten Pulvern ist der Quotient der beiden Teilchengrößen näherungsweise gleich 1, während bei ungemahlenen Pulvern die Streulichtmethode in der Regel eine wesentlich größere mittlere Teilchengröße ergibt als die BET-Methode.

Insbesondere die nach dem ersten erfindungsgemäßen Verfahren erhältlichen Erdalkalititanate weisen keine im Kristallgitter eingebaute OH-Gruppen auf. Das Vorhandensein von im Kristallgitter eingebauten OH-Gruppen lässt sich mittels IR-Spektroskopie ermitteln. Auf Grund der geringen Konzentration der Gitter-OH-Gruppen sind die entsprechenden IR-Signale sehr schwach, aber charakteristisch (vgl.G. Busca, V. Buscaglia, M. Leoni, P. Nanni, Chem. Mater. 6 (1994) 955-61; D. Hennings, S. Schreinemacher, J. Eur. Ceram. Soc., 9 (1992) 41-46; , sowie H.-P. Abicht,D. Völtzke, A. Röder, R. Schneider, J. Woltersdorf, J. Mater. Chem. 7 (1997) 487-92). Eine charakteristische Bande tritt um 3500 cm$^{-1}$ auf. Im Vergleich zu den sehr diffusen Banden, wie sie von auf der Oberfläche adsorbiertem H$_2$O bzw. OH$^-$Gruppen herrühren, sind erstere vergleichsweise scharf. Dies ist verursacht durch die spezifische Bindungsenergie im Gitter gegenüber den verschiedenen Bindungsmöglichkeiten und damit verschiedenen Bindungsenergien auf der Oberfläche. Das geht konform mit einem scharf auftretenden Masseverlust im Temperaturbereich kurz oberhalb von 400°C. F. Valdivieso, M. Pijolat, C. Magnier, M. Soustelle, Solid State Ionics, 83 (1996)283-96 geben dafür eine Temperatur von 415°C an.

Der Chloridgehalt des Titanats beträgt vorzugsweise weniger als 100 ppm, besonders bevorzugt weniger als 20 ppm.

Der Niobgehalt des Titanats beträgt vorzugsweise 10 bis 300 ppm, besonders bevorzugt 15 bis 100 ppm, noch bevorzugter 15 bis 50 ppm.

Das Mol-Verhältnis Aluminium zu Niob liegt bevorzugt zwischen 0,5 und 1,5. Die Bestimmung von Nb und Al erfolgt mittels ICP.

Vorzugsweise enthält das erfindungsgemäße Erdalkalititanat zudem weniger als 500 ppm, bevorzugt weniger als 200 ppm, Sulfat.

Vorzugsweise enthält das erfindungsgemäße Erdalkalititanat weniger als 200 ppm Natrium oder Kalium.

Vorzugsweise enthält das erfindungsgemäße Erdalkalititanat zudem weniger als 20 ppm Eisen, bevorzugt weniger als 5 ppm.

BaTiO$_3$, welches nach einem der erfindungsgemäßen Verfahren hergestellt wurde, weist bevorzugt eine Teilchengröße von weniger als 250 nm auf.

Das erfindungsgemäße Erdalkalititanat weist vorzugsweise überwiegend eine tetragonale Kristallstruktur auf, d.h. zu mehr als 50 Gew.%, bevorzugter zu mehr als 70 Gew.%, noch bevorzugter zu mehr als 90 Gew.% und insbesondere bevorzugt zu mehr als 99 Gew.%, wobei der Rest kubischen Erdalkalititanat und ggf. Verunreinigungen sind. Die Phasenreinheit des erfindungsgemäßen Produktes kann mittels Pulverröntgendiffraktometrie (XRD) bestimmt werden, wobei die quantitative Abschätzung der jeweiligen Anteile über ein Kurven-Fitting möglich ist.

**1.5 Mikroelektronische Bauelemente**

Die erfindungsgemäßen Erdalkalititanate, insbesondere BaTiO$_3$, können zur Herstellung eines mikroelektronischen Bauelements, z.B. eines kapazitiven oder PTC-Baulements, verwendet werden. Aufgrund der Feinteiligkeit der erhaltenen Erdalkalititanate können besonders dünne Schichten und deshalb besonders kleine Bauteilabmessungen realisiert werden. Insbesondere die Anwendung in keramischen Vielschichtkondensatoren (MLCC) kommt in Betracht, wobei aufgrund der Feinteiligkeit des erfindungsgemäßen Erdalkalititanats besonders dünne Schichten (kleiner 2,5 $\mu$m, besonders bevorzugt 0,1 bis 1 $\mu$m) erhalten werden können. Solche Bauelemente können hergestellt werden, indem man aus dem Erdalkalititanat ggf. zusammen mit organischen Additiven einen Schlicker herstellt und diesen mit verschiedenen Methoden (Spin-Coating, Dip-Coating, doctor-blade-Methode) zu dünnen Filmen auszieht. PTC-Bauelemente können nach den Versetzen des Erdalkalititanates mit einen Presshilfsmittel zu einem Grünkörper gepresst werden, der anschließend gesintert wird.

**Beispiele**

Die Erfindung wird im Folgenden anhand einiger ausgewählter Beispiele näher erläutert, wobei die Erfindung keineswegs auf diese Beispiele beschränkt ist.

Beispiel 1:

Bariumtitanat aus Titanoxidhydrat und Bariumhydroxid

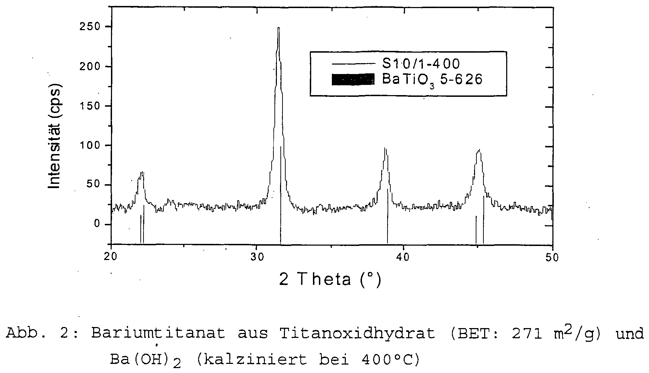

78,87 g $Ba(OH)_2$ * 8 $H_2O$ (Fluka, p.a.) und 21,95 g Titanoxidhydrat (9 Gew.-% flüchtige Bestandteile, Anatas, BET: 271 m$^2$/g, entspricht einer Kristallitgröße von 6 nm; analytische Angaben bezogen auf $TiO_2$: 700 ppm S, <20 ppm Cl, 310 ppm Nb, 10 ppm Fe, <0,1% C; Abb. 1 zeigt das Röntgendiffraktogramm) werden mit 1,5 Liter entgastem, destilliertem Wasser in einen 2 1-Kolben gegeben. Das Gemenge wird 1 Stunde bei 50 °C unter Rühren gelöst bzw. suspendiert. Anschließend wird bei 50 °C unter Unterdruck am Rotationsverdampfer das Lösungsmittel Wasser entfernt. Das erhaltene Pulver wird im Exsikkator getrocknet. Zur Vermeidung der Bildung von $BaCO_3$ durch Reaktion von $Ba(OH)_2$ mit $CO_2$ der Luft werden die Arbeitsschritte unter SchutzgasAtmosphäre durchgeführt.
Die Kalzination des Pulvers unter Bildung von $BaTiO_3$ erfolgt bei Temperaturen T größer oder gleich 360 °C. Nach der Temperaturbehandlung bei 400 °C für 2 Stunden wird ein Produkt mit einer spezifischen Oberfläche (bestimmt nach BET) von 27,6 m$^2$/g erhalten (s. Abb. 2), nach der Temperaturbehandlung bei 600 °C für 2 Stunden ein Produkt mit einer spezifischen Oberfläche (bestimmt nach BET) von 12,8 m$^2$/g erhalten. Als kristalline Phase wird mittels Röntgendiffraktometrie (XRD) jeweils ausschließlich $BaTiO_3$ nachgewiesen. Die aus den spezifischen Oberflächen errechneten $BaTiO_3$-Kristallitgrößen sind 36 bzw. 78 nm. Nach der Temperung bei 1000 °C (2 Stunden) beträgt die BET-Oberfäche 3,2 m$^2$/g, dies entspricht einer Kristallitgröße von 310 nm.
Nach Perlmahlung einer 25%-igen Suspension des bei 600°C kalzinierten Produkts (20 Minuten diskontinuierliche Perlmahlung mit Zirkonsilikat-Mahlperlen von 0,4-0,6 mm Durchmesser) weist das erhaltene gemahlene und getrocknete Bariumtitanat eine BET-Oberfläche von 32,5 m$^2$/g auf.

Beispiel 2:

Bariumtitanat aus Titanoxidhydrat und Bariumoxalat

56,34 g $BaC_2O_4$ (hergestellt durch Alfa Aesar, Karlsruhe) und 21,95 g Titanoxidhydrat (Zusammensetzung wie in Beispiel 1) werden mit 0,313 Liter destilliertem Wasser und 78 g PVCummantelten Stahlkugeln 24 Stunden in einer PVC-Trommel gemischt/gemahlen. Nach dem Absaugen und Trocknen wird die Pulvergemenge kalziniert. Für einen vollständigen Umsatz des sich intermediär aus dem Bariumoxalat bildenden $BaCO_3$ mit $TiO_2$ unter Bildung von $BaTiO_3$ sind Temperaturen von 950 °C erforderlich. Nach der Temperung bei 1000 °C (2 Stunden) beträgt die BET-Oberfäche 2,8 m$^2$/g, dies entspricht einer $BaTiO_3$-Kristallitgröße von 350 nm.

Beispiel 3:

Bariumtitanat aus Titanoxidhydrat und Bariumcarbonat

49,34 g $BaCO_3$ (Solvay, Sabed VL 600, Lot.-Nr. 325510) und 21,95 g Titanoxidhydrat (Zusammensetzung wie in Beispiel 1) werden mit 0,280 Liter destilliertem Wasser und 70 g PVCummantelten Stahlkugeln 24 Stunden in einer PVC-Trommel gemischt/gemahlen. Nach dem Absaugen und Trocknen wird die Pulvergemenge kalziniert. Für einen vollständigen Umsatz des $BaCO_3$ mit $TiO_2$ unter Bildung von $BaTiO_3$ sind Temperaturen von 950 °C erforderlich. Nach der Temperung bei 1000 °C (2 Stunden) beträgt die BET-Oberfäche 2,2 m$^2$/g, dies entspricht einer $BaTiO_3$-Kristallitgröße von 450 nm.

Beispiel 4:

Bariumtitanat aus Titanoxidhydrat und Bariumnitrat

65.34 g $Ba(NO_3)_2$ (p.a.) und 21,71 g Titanoxidhydrat (8 Gew.-% flüchtige Bestandteile, Anatas, BET: 331 m$^2$/g, entspricht einer Kristallitgröße von 5 nm; 6400 ppm S, <20 ppm Cl, 78 ppm Nb, <10 ppm Fe, <1000 ppm C) werden mit 1,0 Liter destilliertem Wasser in einen 2 1-Kolben gegeben. Das Gemenge wird 10 Minuten bei 50 °C unter Rühren gelöst bzw. suspendiert. Anschließend wird bei 50 °C unter Unterdruck am Rotationsverdampfer das Lösungsmittel Wasser entfernt. Das erhaltene Pulver wird im Trockenschrank bei 120 °C getrocknet.

Die Kalzination des Pulver unter Bildung von $BaTiO_3$ erfolgt bei Temperaturen von 600 °C. Nach der Temperaturbehandlung bei 600 °C für 2 Stunden wird ein Produkt mit einer spezifischen Oberfläche (bestimmt nach BET) von 3,6 $m^2$/g erhalten. Als kristalline Phase wird $BaTiO_3$ erhalten. Nach der Temperaturbehandlung bei 800 °C für 2 Stunden wird ein Produkt mit einer spezifischen Oberfläche (bestimmt nach BET) von 2,7 $m^2$/g erhalten. Als alleinige kristalline Phase wird mittels Röntgendiffraktometrie (XRD) $BaTiO_3$ nachgewiesen. Die aus den spezifischen Oberflächen errechneten $BaTiO_3$-Kristallitgrößen sind 277 bzw. 369 nm.

Nach der Temperung bei 1000 °C (2 Stunden) beträgt die BET-Oberfäche 1,5 $m^2$/g, dies entspricht einer Kristallitgröße von 664 nm. Nach Perlmahlung liegen die BET-Oberflächen aller Proben über 5 $m^2$/g.

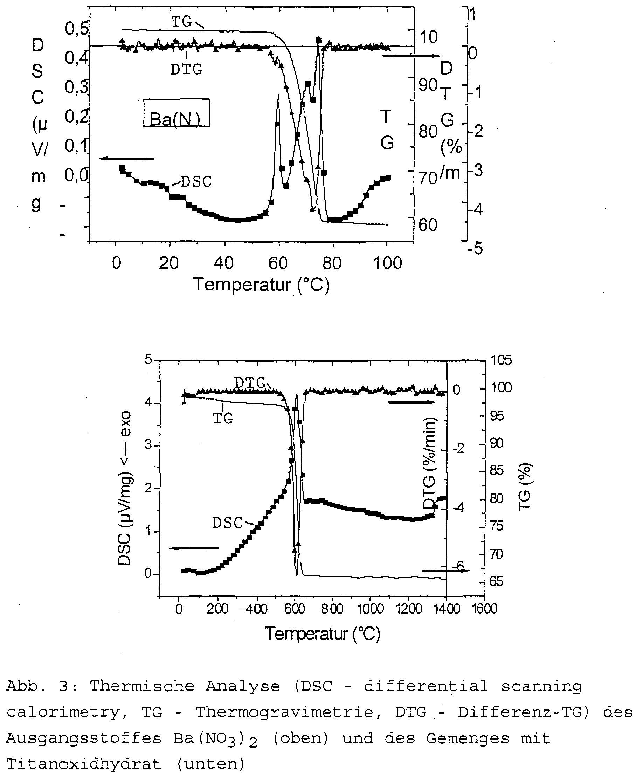

Überraschenderweise finden die Zersetzungsprozesse von $Ba(NO_3)_2$ im Gemenge mit $TiO_2$ deutlich akzentuierter und eindeutiger statt als in der reinen Substanz (s.Abb.3). Bei ca. 600 °C ist die Zersetzung nach einem Schritt fast vollständig abgeschlossen. Im Gegensatz dazu setzt sich die reine Substanz über die Zwischenstufe $Ba(NO_2)_2$ erst bei ca. 750 °C vollständig um.

Nach dem Kalzinieren der Probe bei 600 °C für 2 h werden neben dem kristallinen $BaTiO_3$ noch geringe Mengen unumgesetztes $Ba(NO_3)_2$ gefunden, welches über eine Verlängerung der Kalzinationsdauer vollständig in das $BaTiO_3$ überführt werden kann.

Nach einer Kalzination bei 400 °C liegt nur das Gemenge der Ausgangsstoffe vor.

Beispiel 5:

Kompensation von Nb mit unterschiedlichen Mengen an Al:

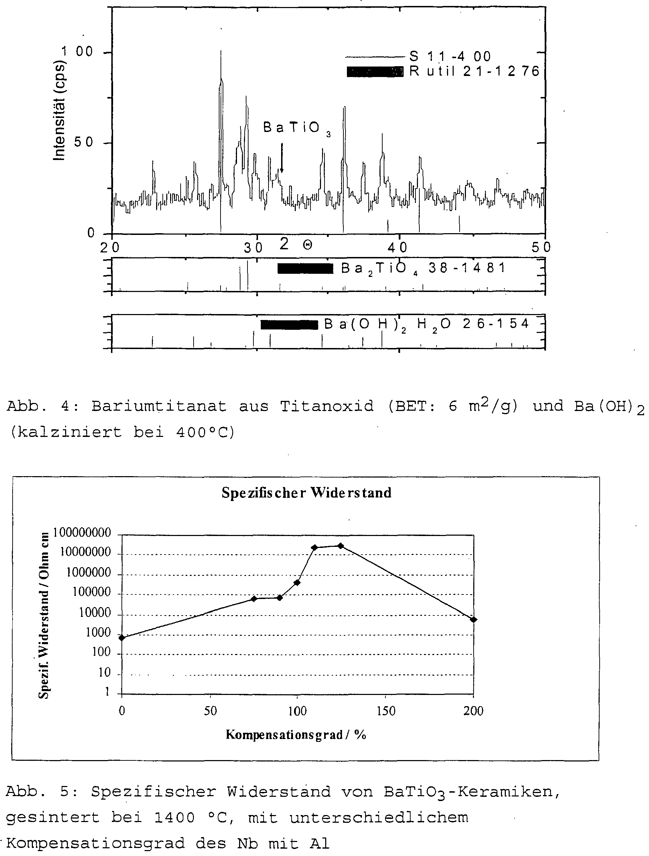

Als Ausgangsstoffe dienten $BaCO_3$ (Solvay Sabed VL 600) und eine Titanoxidhydrat-Probe (9 Gew.-% flüchtige Bestandteile, Anatas, BET: 316 m2/g, entspricht einer Kristallitgröße von 5 nm; analytische Daten bezogen auf $TiO_2$: 2300 ppm S, < 20 ppm Cl, 7 ppm Al, 6 ppm Fe, < 0.1 % C, und mit einem Niob-Gehalt von 810 ppm (Massenanteil) (entspricht ca. 0.07 mol%). Zur Kompensation des Niobs wurde Aluminium in Form des wasserlöslichen Salzes $Al(NO_3)_3 \cdot 9H_2O$ zugeführt. 148,126 g $BaCO_3$ wurden mit 65,723g $TiO_2$ und 0,2142 g $Al(NO_3)_3 \cdot 9H_2O$ mit 213,8 g kunststoffummantelten Stahlkugeln in 856 ml destilliertem Wasser in einer Kugelmühlen 24 Stunden gemahlen/gemischt. Dieser Suspension wurde das Mahlmedium Wasser im Rotationsverdampfers (ca. 50 °C, 60 mbar) unter Ausfällung der Al-Komponente entzogen und anschließend bei 120 °C im Trockenschrank getrocknet. Danach erfolgte die Calcinierung des Gemenges für zwei Stunden bei 1.100 °C. Die daraus erhaltenen Pulver wurden mit Stahlkugeln und der vierfachen Menge an Wasser 24 Stunden feingemahlen, um die während der Calcination gebildeten Agglomerate zu zerstören. Nach dem Absaugen der Suspension wurde das Pulver 24 Stunden bei 120 °C getrocknet, auf Raumtemperatur abgekühlt und mit einem Presshilfsmittel (Mischung aus Polyvinylalkohol, Wasser und Glycerin) 24 Stunden auf der Kugelmühle vermengt ("Anmachen"). Dieses angemachte Pulver wurde anschließend in einer mehrstufigen Prozedur zu Tabletten (den sogenannten "Grünlingen") gepresst. Die Tabletten wurden anschließend bei vier verschiedenen Temperaturen im Bereich zwischen 1.250 °C und 1.400 °C gesintert. Die gesinterten Tabletten wurden geschliffen und anschließend mit einer In-Ga-Legierung auf den Stirnseiten der Tabletten versehen. Der spezifische Widerstand wurde bei Raumtemperatur ermittelt. In Abb. 5 ist der spezifische Widerstand der Keramiken als Funktion des Kompensationsgrades aufgetragen.

Beispiel 6:

Hydrothermale Umsetzung von Titanoxidhydrat mit Bariumhydroxid

Es wurden 12,62 g (0,04 mol) $Ba(OH)_2 \cdot 8H_2O$ (p.A. Fluka Chemie GmbH) wurden mit 3,51 g Titanoxidhydrat (Zusammensetzung wie in Beispiel 1) und 150 ml destilliertem und entgastem Wasser in einen Teflon-Becher gegeben. Das molare Ti/Ba-Ausgangsverhältnis betrug 1.0. Der Umsatz erfolgte bei 100 °C unter Rühren der Reaktionsmischung in einem Laborautoklaven (Berghoff HR 200) mit einer Haltezeit von einer Stunde. Um eine mögliche Bildung von Bariumcarbonat zu vermeiden, wurde entgastes, $CO_2$-freies Wasser eingesetzt. Unter den gewählten $Ba(OH)_2$/Lösungsmittel Wasser-Verhältnissen stellt sich ein pH-Wert von 13,7 ein. Nach der Reaktion wurde der Feststoff über eine Filterfritte G4 abgesaugt, mehrmals mit destilliertem Wasser gewaschen bis ein pH-Wert von pH = 9 resultierte und anschließend für 24 h bei 120 °C im Trockenschrank getrocknet. Die erhaltenen Reaktionsprodukt weist eine spezifische Oberfläche (nach BET) von 20,7 $m^2$/g auf und ist röntgendiffraktometrisch eindeutig als $BaTiO_3$ zu charakterisieren. Bei Verwendung von grobteiligem Titandioxid (hochkristalliner Rutil, BET: 6 $m^2$/g, wie in Vergleichsbeispiel 1) anstelle des Titanoxidhydrats findet so gut wie keine Umsetzung zu Bariumtitanat statt. Im Diffraktogramm sind neben den Rutil-Reflexen nur geringe Hinweise auf $BaCO_3$ (bei $2\Theta = 24°$) und $BaTiO_3$ (bei $2\Theta = 31.6°$) zu erkennen.

Vergleichsbeispiel 1:

**1.6 Umsetzung von grobem Titandioxid mit Bariumhydroxid**

78,87 g $Ba(OH)_2$ * 8 $H_2O$ (Fluka, p.a.) und 19,98 g Titandioxid (hochkristalliner Rutil, BET: 6 $m^2$/g, entspricht einer Kristallitgröße von 250 nm) werden mit 1,5 Liter entgastem, destilliertem Wasser in einen 2 1-Kolben gegeben. Das Gemenge wird 1 Stunde bei 50 °C unter Rühren gelöst bzw. suspendiert. Anschließend wird bei 50 °C unter Unterdruck am Rotationsverdampfer das Lösungsmittel Wasser entfernt. Das erhaltene Pulver wird im Exsikkator getrocknet. Zur Vermeidung der Bildung von $BaCO_3$ durch Reaktion von $Ba(OH)_2$ mit $CO_2$ der Luft werden die Arbeitsschritte unter SchutzgasAtmosphäre durchgeführt.

Die Kalzination des Pulvers erfolgt bei Temperaturen von ca. 360 °C. Nach der Temperaturbehandlung bei 400 °C für 2 Stunden wird ein Produkt mit einer spezifischen Oberfläche (bestimmt nach BET) von 2,5 $m^2$/g erhalten (s. Abb. 4), nach der Temperaturbehandlung bei 600 °C für 2 Stunden ein Produkt mit einer spezifischen Oberfläche (bestimmt nach BET) von 2,2 $m^2$/g und nach der Temperaturbehandlung bei 1000 °C für 2 Stunden ein Produkt mit einer spezifischen Oberfläche (bestimmt nach BET) von 1,9 $m^2$/g erhalten.

Im Gegensatz zu Beispiel 1 ist die Hauptphase nach der Temperung bei 400 °C Rutil, neben $Ba_2TiO_4$ und $BaTiO_3$ sowie unumgesetztem bzw. rückreagiertem $Ba(OH)_2$ $H_2O$. Nach der Temperung bei 600 °C und 1000 °C ist ebenfalls kein vollständiger Umsatz zu $BaTiO_3$ festzustellen. Es treten als Nebenphasen Rutil und $Ba_2TiO_4$ auf.

Vergleichsbeispiel 2:

**1.7 Bariumtitanat aus grobem Titandioxid und Bariumcarbonat**

98,67 g $BaCO_3$ (hergestellt von Solvay, Sabed VL 600, Lot.-Nr. 325510) und 39,95 g Titandioxid (hochkristalliner Rutil, BET: 6 $m^2$/g, entspricht einer Kristallitgröße von 250 nm) werden mit 0,550 Liter destilliertem Wasser und 139 g PVCummantelten Stahlkugeln 24 Stunden in einer PVC-Trommel gemischt/gemahlen. Nach dem Absaugen und Trocknen werden die Pulvergemenge kalziniert. Für einen vollständigen Umsatz des $BaCO_3$ mit $TiO_2$ unter Bildung von $BaTiO_3$ sind Temperaturen von ca. 950 °C erforderlich. Nach der Temperung bei 1000 °C (2 Stunden) beträgt die BET-Oberfäche 2,0 $m^2$/g, dies entspricht einer $BaTiO_3$-Kristallitgröße von 500 nm.

**Patentansprüche**

1. Verfahren zur Herstellung von Erdalkalititanaten durch Umsetzung von Erdalkalimetallverbindungen mit Titandioxidpartikeln, **dadurch gekennzeichnet, dass** die Titandioxidpartikel eine BET-Oberfläche von ·mehr als 50 $m^2$/g, einen Sulfatgehalt <1,5 Gew.% (bezogen auf $TiO_2$), einen Chloridgehalt von < 1000 ppm und einen Kohlenstoffgehalt von < 1000 ppm aufweisen.

2. Verfahren nach Anspruch 1, **dadurch gekennzeichnet, dass** die Titandioxidpartikel einen $H_2SO_4$-Gehalt bis 0,3 Gew. % (bezogen auf $TiO_2$) aufweisen.

3. Verfahren nach einem der Ansprüche 1 oder 2, **dadurch gekennzeichnet, dass** die Titandioxidpartikel, bezogen auf $TiO_2$, zwischen 30 ppm und 1000 ppm Niob, bevorzugt zwischen 50 und 100 ppm Niob, enthalten.

4. Verfahren nach einem der Ansprüche 1 bis 3, **dadurch gekennzeichnet, dass** die Titandioxidpartikel unter hydrothermalen Bedingungen mit einer Erdalkaliverbindung direkt zu einem Erdalkalititanat umgesetzt werden.

5. Verfahren nach Anspruch 4, **dadurch gekennzeichnet, dass** die Titandioxidpartikel unter hydrothermalen Bedingungen in einer $Ba(OH)_2$-Lösung direkt zu $BaTiO_3$ umgesetzt werden.

6. Verfahren nach einem der Ansprüche 1 bis 3, **dadurch gekennzeichnet, dass** die Titandioxidpartikel mit einem Erdalkalicarbonat, Erdalkalihydroxid oder Erdalkalinitrat in einer Festkörperreaktion umgesetzt werden.

7. Verfahren nach einem oder mehreren der vorhergehenden Ansprüche, **dadurch gekennzeichnet, dass** bei der Herstellung der Erdalkalititanate soviel einer Aluminiumverbindung zugegeben wird, dass das Molverhältnis von Aluminium zu Niob zwischen 0,5 und 1,5 beträgt.

8. Verfahren nach einem oder mehreren der vorhergehenden Ansprüche, **dadurch gekennzeichnet, dass** die Titandioxidpartikel in der Anatas-Kristallstruktur vorliegen.

9. Verfahren nach einem oder mehreren der vorhergehenden Ansprüche, **dadurch gekennzeichnet, dass** die Titandioxidpartikel weniger als 100 ppm Chlorid, bevorzugt weniger als 20 ppm Chlorid, jeweils bezogen auf $TiO_2$, enthalten.

10. Verfahren nach einem oder mehreren der vorhergehenden Ansprüche, **dadurch gekennzeichnet, dass** die BET-Oberfläche der Titandioxidpartikel 200 bis 380 $m^2$/g beträgt.

11. Verfahren nach einem oder mehreren der vorhergehenden Ansprüche, **dadurch gekennzeichnet, dass** die Titandioxidpartikel weniger als 200 ppm Natrium und weniger als 200 ppm Kalium, bezogen auf $TiO_2$ enthalten.

12. Verfahren nach einem oder mehreren der vorhergehenden Ansprüche, **dadurch gekennzeichnet, dass** die Titandioxidpartikel Titanoxidhydratpartikel mit einem $H_2O$-Gehalt von 0,4 bis 25 Gew.-% sind.

13. Verfahren nach Anspruch 12, **dadurch gekennzeichnet, dass** die Titanoxidhydratpartikel einen $H_2O$-Gehalt von 2 bis 10 Gew.-%, bezogen auf $TiO_2$ aufweisen.

14. Verfahren nach einem oder mehreren der vorhergehenden Ansprüche, **dadurch gekennzeichnet, dass** die Titandioxidpartikel weniger als 30 ppm Eisen, bevorzugt weniger als 10 ppm Eisen, bezogen auf $TiO_2$ enthalten.

15. Verfahren nach einem oder mehreren der vorhergehenden Ansprüche, **dadurch gekennzeichnet, dass** die Titandioxidpartikel durch Hydrolyse von Titanylsulfat erhältlich sind.

16. Verfahren nach einem oder mehreren der vorhergehenden Ansprüche, **dadurch gekennzeichnet, dass** die Titandioxidpartikel und Bariumhydroxid oder Bariumnitrat gemeinsam nassgemahlen und getrocknet oder trocken gemahlen und anschließend bei einer Temperatur unterhalb von 700°C kalziniert werden.

17. Verfahren nach einem der Ansprüche 1 bis 15, **dadurch gekennzeichnet, dass** eine Zubereitung aus einer wässrigen Suspension von Titandioxidpartikeln und einer wasserlöslichen Erdalkaliverbindung hergestellt wird, die anschließend getrocknet und unterhalb von 700°C kalziniert wird.

18. Verfahren nach einem der Ansprüche 16 oder 17, **dadurch gekennzeichnet, dass** die Kalzinierung der Titandioxidpartikel mit der Erdalkalimetallverbindung nicht isotherm, sondern bei näherungsweise konstanter Umwandlungsrate zum Erdalkalititanat erfolgt.

19. Pulverförmige Zubereitung, enthaltend Titanoxidpartikel mit einer BET-Oberfläche von mehr als 50 $m^2$/g und eine wasserlösliche Erdalkaliverbindung, wobei das Molverhältnis von Titan und Erdalkalimetall zwischen 0,95 und 1,05 liegt, wobei die Titandioxidpartikel wie in einem oder mehreren der Ansprüche 1, 2, und 8 bis 14 definiert sind.

20. Zubereitung nach Anspruch 19, wobei die wasserlösliche Erdalkaliverbindung auf den Titanoxidpartikeln abgeschieden und die Mischung anschließend getrocknet wurde.

21. Erdalkalititanat, welches durch ein Verfahren nach einem oder mehreren der Ansprüche 1 bis 18 herstellbar ist.

22. Erdalkalititanat nach Anspruch 21, **dadurch gekennzeichnet, dass** es einen Chloridgehalt von weniger als 100 ppm, bevorzugt weniger als 10 ppm, und einen Niobgehalt von 10 bis 300 ppm, bevorzugt von 15 bis 50 ppm aufweist.

23. Erdalkalititanat nach einem oder mehreren der Ansprüche 21 bis 22, **dadurch gekennzeichnet, dass** es eine BET-Oberfläche von 20 bis 60 $m^2$/g aufweist.

24. Erdalkalititanat nach einem oder mehreren der Ansprüche 21 bis 23, **dadurch gekennzeichnet, dadurch gekennzeichnet, dass** es einen Eisengehalt von weniger als 20 ppm aufweist.

25. Erdalkalititanat nach einem oder mehreren der Ansprüche 21 bis 23, **dadurch gekennzeichnet, dass** es weiterhin Aluminium enthält, so dass das Mol-Verhältnis Aluminium zu Niob zwischen 0,5 und 1,5 beträgt.

**26.** Erdalkalititanat nach einem oder mehreren der Ansprüche 21 bis 25, **dadurch gekennzeichnet, dass** die BET-Oberfläche der ungemahlenen Probe nach der Kalzinierung 5 bis 50 m$^2$/g, bevorzugt 15 bis 40 m$^2$/g, beträgt.

**27.** Erdalkalititanat nach Anspruch 24, **dadurch gekennzeichnet, dass** es weniger als 5 ppm Eisen enthält.

**28.** Erdalkalititanat nach einem oder mehreren der Ansprüche 21 bis 26, **dadurch gekennzeichnet, dass** das Erdalkalititanat piezoelektrisch ist.

**29.** Erdalkalititanat nach einem oder mehreren der Ansprüche 21 bis 28, **dadurch gekennzeichnet, dass** das Erdalkalititanat BaTiO$_3$ ist.

**30.** Erdalkalititanat nach einem oder mehreren der Ansprüche 21 bis 28, **dadurch gekennzeichnet, dass** das Erdalkalititanat weniger als 500 ppm Sulfat, bevorzugt weniger als 200 ppm Sulfat, aufweist.

**31.** Verwendung eines Erdalkalititanats nach einem oder mehreren der Ansprüche 21 bis 30 zur Herstellung eines mikroelektronischen Bauelements, insbesondere eines keramischen Vielschichtkondensators (MLCC).

**32.** Verfahren zur Herstellung eines mikroelektronischen Bauelements, wobei ein Erdalkalititanat nach einem oder mehreren der Ansprüche 21 bis 30 gemahlen und anschließend zu einem Grünkörper gepresst wird, der anschließend gesintert wird.

**33.** Mikroelektronisches Bauelement umfassend ein Erdalkalititanat nach einem oder mehreren der Ansprüche 21 bis 30.

**34.** Mikroelektronisches Bauelement nach Anspruch 33, wobei das Erdalkalititanat in Form einer Schicht mit einer Dicke von weniger als 2.5 $\mu$m, bevorzugt in einer Dicke von weniger als 1.0 $\mu$m vorliegt.

**Claims**

**1.** Method for the production of alkaline-earth titanates by reacting alkaline-earth metal compounds with titanium dioxide particles, **characterized in that** the titanium dioxide particles have a BET-surface area of more than 50 m$^2$/g, a sulfate content of < 1.5 wt.% (based on TiO$_2$), a chloride content of < 1000 ppm and a carbon content of < 1000 ppm.

**2.** Method according to claim 1, **characterized in that** the titanium dioxide particles have a H$_2$SO$_4$-content of up to 0.3 wt. % (based on TiO$_2$).

**3.** Method according to any of claims 1 or 2, **characterized in that** the titanium dioxide particles contain, based on TiO$_2$, between 30 ppm and 1000 ppm niobium, preferably between 50 and 100 ppm niobium.

**4.** Method according to any of claims 1 to 3, **characterized in that** the titanium dioxide particles are converted directly to an alkaline-earth titanate with an alkaline-earth compound under hydrothermal conditions.

**5.** Method according to claim 4, **characterized in that** the titanium dioxide particles are converted directly to BaTiO$_3$ under hydrothermal conditions in a Ba(OH)$_2$ solution.

**6.** Method according to any of claims 1 to 3, **characterized in that** the titanium dioxide particles are reacted with an alkaline-earth carbonate, alkaline-earth hydroxide or alkaline-earth nitrate in a solid-state reaction.

**7.** Method according to one or more of the preceding claims, **characterized in that** during the production of alkaline-earth titanates an aluminum compound is added in such an amount that the molar ratio of aluminum to niobium is between 0.5 and 1.5.

**8.** Method according to one or more of the preceding claims, **characterized in that** the titanium dioxide particles are present in the anatase crystal structure.

**9.** Method according to one or more of the preceding claims, **characterized in that** the titanium dioxide particles contain less than 100 ppm chloride, preferably less than 20 ppm chloride, each based on TiO$_2$.

10. Method according to one or more of the preceding claims, **characterized in that** the BET-surface area of the titanium dioxide particles is 200 to 380 $m^2/g$.

11. Method according to one or more of the preceding claims, **characterized in that** the titanium dioxide particles contain less than 200 ppm sodium and less than 200 ppm potassium, based on $TiO_2$.

12. Method according to one or more of the preceding claims, **characterized in that** the titanium dioxide particles are titanium oxide hydrate particles having a $H_2O$-content of 0.4 to 25 wt.%.

13. Method according to claim 12, **characterized in that** the titanium oxide hydrate particles have a $H_2O$-content of 2 to 10 wt.%, based on $TiO_2$.

14. Method according to one or more of the preceding claims, **characterized in that** the titanium dioxide particles contain less than 30 ppm iron, preferably less than 10 ppm iron, based on $TiO_2$.

15. Method according to one or more of the preceding claims, **characterized in that** the titanium dioxide particles are obtainable by hydrolyzing titanyl sulfate.

16. Method according to one or more of the preceding claims, **characterized in that** the titanium dioxide particles and barium hydroxide or barium nitrate are wetly ground together and dried or are dryly ground and subsequently calcined at a temperature below 700 °C.

17. Method according to any of claims 1 to 15, **characterized in that** a formulation is produced from an aqueous suspension of titanium dioxide particles and a water-soluble alkaline-earth compound, which is subsequently dried and calcined at below 700 °C.

18. Method according to any of claims 16 or 17, **characterized in that** the calcination of the titanium dioxide particles and the alkaline-earth metal compound does not take place isothermally, but at an approximately constant conversion rate to the alkaline-earth titanate.

19. Powdery formulation, containing titanium oxide particles having a BET-surface area of more than 50 $m^2/g$ and a water-soluble alkaline earth-compound, wherein the molar ratio of titanium and alkaline-earth metal is between 0.95 and 1.05, wherein the titanium dioxide particles are defined in one or more of claims 1, 2, and 8 to 14.

20. Formulation according to claim 19, wherein the water-soluble alkaline earth compound was deposited on the titanium oxide particles and subsequently the mixture was dried.

21. Alkaline-earth titanate, which is producible through a method according to one or more of claims 1 to 18.

22. Alkaline-earth titanate according to claim 21, **characterized in that** it has a chloride content of less than 100 ppm, preferably of less than 10 ppm, and a niobium content of 10 to 300 ppm, preferably of 15 to 50 ppm.

23. Alkaline-earth titanate according to any of claims 21 to 22, **characterized in that** it has a BET-surface area of 20 to 60 $m^2/g$.

24. Alkaline-earth titanate according to one or more of claims 21 to 23, **characterized in that** it has an iron content of less than 20 ppm.

25. Alkaline-earth titanate according to one or more of claims 21 to 23, **characterized in that** it further contains aluminum, so that the molar ratio aluminum to niobium is between 0.5 and 1.5.

26. Alkaline-earth titanate according to one or more of claims 21 to 25, **characterized in that** the BET-surface area of the unground sample is 5 to 50 $m^2/g$, preferably 15 to 40 $m^2/g$ after calcination.

27. Alkaline-earth titanate according to claim 24, **characterized in that** it contains less than 5 ppm iron.

28. Alkaline-earth titanate according to one or more of claims 21 to 26, **characterized in that** the alkaline-earth titanate is piezoelectric.

**29.** Alkaline-earth titanate according to one or more of claims 21 to 28, **characterized in that** the alkaline-earth titanate is $BaTiO_3$.

**30.** Alkaline-earth titanate according to one or more of claims 21 to 28, **characterized in that** the alkaline-earth titanate has less than 500 ppm sulfate, preferably less than 200 ppm sulfate.

**31.** Use of an alkaline-earth titanate according to one or more of claims 21 to 30 for producing a micro-electronic component, in particular a multi-layer ceramic capacitor (MLCC).

**32.** Method for the production of a micro-electronic component part, wherein an alkaline-earth titanate according to one or more of claims 21 to 30 is ground and subsequently pressed into a green body, which is subsequently sintered.

**33.** Micro-electronic component part comprising an alkaline-earth titanate according to one or more of claims 21 to 30.

**34.** Micro-electronic component part according to claim 33, wherein the alkaline-earth titanate is present in the form of a layer having a thickness of less than 2.5 $\mu$m, preferably in a thickness of less than 1.0 $\mu$m.

**Revendications**

**1.** Procédé de production de titanates alcalinoterreux en faisant réagir des composés métalliques alcalinoterreux avec des particules de dioxyde de titane, **caractérisé en ce que** les particules de dioxyde de titane comportent une surface BET de plus de 50 m$^2$/g, une teneur en sulfate < 1,5% poids (en référence au $TiO_2$), une teneur en chlorure de < 1000 ppm et une teneur en carbone de < 1000 ppm.

**2.** Procédé selon la revendication 1, **caractérisé en ce que** les particules de dioxyde de titane comportent une teneur en $H_2SO_4$ jusqu'à 0,3 % poids (en référence au $TiO_2$).

**3.** Procédé selon l'une quelconque des revendications 1 ou 2, **caractérisé en ce que** les particules de dioxyde de titane contiennent, en référence au Ti02, entre 30 ppm et 1000 ppm de niobium, de préférence entre 50 et 100 ppm de niobium.

**4.** Procédé selon l'une quelconque des revendications 1 à 3, **caractérisé en ce que** les particules de dioxyde de titane sont converties avec un composé alcalinoterreux dans des conditions hydrothermiques directement en un titanate alcalinoterreux.

**5.** Procédé selon la revendication 4, **caractérisé en ce que** les particules de dioxyde de titane dans des conditions hydrothermiques sont converties dans une solution $Ba(OH)_2$ directement en $BaTiO_3$.

**6.** Procédé selon l'une quelconque des revendications 1 à 3, **caractérisé en ce que** les particules de dioxyde de titane sont transformées avec un carbonate alcalinoterreux, un hydroxyde alcalinoterreux ou un nitrate alcalinoterreux en une réaction de corps solide.

**7.** Procédé selon l'une quelconque ou plusieurs des revendications précédentes, **caractérisé en ce que** lors de la production des titanates alcalinoterreux un composé d'aluminium est ajouté dans une telle quantité que le rapport moléculaire entre l'aluminium et le niobium se situe entre 0,5 et 1,5.

**8.** Procédé selon l'une quelconque ou plusieurs des revendications précédentes, **caractérisé en ce que** les particules de dioxyde de titane sont présentes dans la structure cristalline d'anatase.

**9.** Procédé selon l'une quelconque ou plusieurs des revendications précédentes, **caractérisé en ce que** les particules de dioxyde de titane contiennent moins de 100 ppm de chlorure, de préférence moins de 20 ppm de chlorure, respectivement en référence au $TiO_2$.

**10.** Procédé selon l'une quelconque ou plusieurs des revendications précédentes, **caractérisé en ce que** la surface BET des particules de dioxyde de titane est de 200 à 380 m$^2$/g.

**11.** Procédé selon l'une quelconque ou plusieurs des revendications précédentes, **caractérisé en ce que** les particules de dioxyde de titane contiennent moins de 200 ppm de sodium et moins de 200 ppm de potassium, en référence au $TiO_2$.

12. Procédé selon l'une quelconque ou plusieurs des revendications précédentes, **caractérisé en ce que** les particules de dioxyde de titane sont des particules d'oxyde de titane hydraté avec une teneur en $H_2O$ de 0,4 à 25 %/poids.

13. Procédé selon la revendication 12, **caractérisé en ce que** les particules d'oxyde de titane hydraté comportent une teneur en $H_2O$ de 2 à 10 %/poids, en référence au $TiO_2$.

14. Procédé selon l'une quelconque ou plusieurs des revendications précédentes, **caractérisé en ce que** les particules d'oxyde de titane contiennent moins de 30 ppm de fer, de préférence moins de 10 ppm de fer, en référence au $TiO_2$.

15. Procédé selon l'une quelconque ou plusieurs des revendications précédentes, **caractérisé en ce que** les particules d'oxyde de titane peuvent être obtenues par hydrolyse de sulfate de titane.

16. Procédé selon l'une quelconque ou plusieurs des revendications précédentes, **caractérisé en ce que** les particules de dioxyde de titane et l'hydroxyde de baryum ou le nitrate de baryum subissent ensemble un broyage humide et sont séchées ou broyées à sec et ensuite calcinées à une température inférieure à 700° C.

17. Procédé selon l'une quelconque des revendications 1 à 15, **caractérisé en ce qu'**une préparation est produite à partir d'une suspension aqueuse de particules de dioxyde de titane et d'un composé alcalinoterreux hydrosoluble, qui est ensuite séchée et calcinée à une température inférieure à 700° C.

18. Procédé selon l'une quelconque des revendications 16 ou 17, **caractérisé en ce que** la calcination des particules de dioxyde de titane avec le composé métallique alcalinoterreux a lieu de manière non isotherme, mais à une vitesse de transformation en titanate alcalinoterreux à peu près constante.

19. Préparation pulvérulente contenant des particules d'oxyde de titane avec une surface BET de plus de 50 $m^2/g$ et un composé alcalinoterreux hydrosoluble, le rapport moléculaire entre le titane et le métal alcalinoterreux se situant entre 0,95 et 1,05, les particules de dioxyde de titane étant définies comme dans une quelconque ou plusieurs des revendications 1,2 et 8 à 14.

20. Préparation selon la revendication 19, le composé alcalinoterreux hydrosoluble ayant été précipité sur les particules d'oxyde de titane et le mélange ayant été ensuite séché.

21. Titanate alcalinoterreux, lequel peut être produit par un procédé selon l'une quelconque ou plusieurs des revendications 1 à 18.

22. Titanate alcalinoterreux selon la revendication 21, **caractérisé en ce qu'**il comporte une teneur en chlorure inférieure à 100 ppm, de préférence inférieure à 10 ppm et une teneur en niobium de 10 à 300 ppm, de préférence de 15 à 50 ppm.

23. Titanate alcalinoterreux selon l'une quelconque ou plusieurs des revendications 21 à 22, **caractérisé en ce qu'**il comporte une surface BET de 20 à 60 $m^2/g$.

24. Titanate alcalinoterreux selon l'une quelconque ou plusieurs des revendications 21 à 23, **caractérisé en ce qu'**il comporte une teneur en fer inférieure à 20 ppm.

25. Titanate alcalinoterreux selon l'une quelconque ou plusieurs des revendications 21 à 23, **caractérisé en ce qu'**il contient en plus de l'aluminium de telle sorte que le rapport moléculaire entre l'aluminium et le niobium se situe entre 0,5 et 1,5.

26. Titanate alcalinoterreux selon l'une quelconque ou plusieurs des revendications 21 à 25, **caractérisé en ce que** la surface BET de l'échantillon non broyé après calcination est de 5 à 50 $m^2/g$, de préférence 15 à 40 $m^2/g$.

27. Titanate alcalinoterreux selon la revendication 24, **caractérisé en ce qu'**il contient moins de 5 ppm de fer.

28. Titanate alcalinoterreux selon l'une quelconque ou plusieurs des revendications 21 à 26, **caractérisé en ce que** le titanate alcalinoterreux est piézoélectrique.

29. Titanate alcalinoterreux selon l'une quelconque ou plusieurs des revendications 21 à 28, **caractérisé en ce que** le titanate alcalinoterreux est du $BaTiO_3$.

30. Titanate alcalinoterreux selon l'une quelconque ou plusieurs des revendications 21 à 28, **caractérisé en ce que** le titanate alcalinoterreux comporte moins de 500 ppm de sulfate, de préférence moins de 200 ppm de sulfate.

31. Utilisation d'un titanate alcalinoterreux selon l'une quelconque ou plusieurs des revendications 21 à 30, destinée à la production d'un composant microélectronique, notamment d'un condensateur multicouche céramique (CMCC).

32. Procédé pour la production d'un composant microélectronique, un titanate alcalinoterreux étant broyé et ensuite comprimé en un corps vert, qui est ensuite fritté, selon l'une quelconque ou plusieurs des revendications 21 à 30.

33. Composant microélectronique comprenant un titanate alcalinoterreux selon l'une quelconque ou plusieurs des revendications 21 à 30.

34. Composant microélectronique selon la revendication 33, le titanate alcalinoterreux étant présent sous la forme d'une couche avec une épaisseur inférieure à 2,5 $\mu$m, de préférence dans une épaisseur inférieure à 1,0 $\mu$m.

Abb.1: Röntgendiffraktogramm von Titanoxidhydrat

Abb. 2: Bariumtitanat aus Titanoxidhydrat (BET: 271 m$^2$/g) und Ba(OH)$_2$ (kalziniert bei 400°C)

Abb. 3: Thermische Analyse (DSC - differential scanning calorimetry, TG - Thermogravimetrie, DTG - Differenz-TG) des Ausgangsstoffes Ba(NO₃)₂ (oben) und des Gemenges mit Titanoxidhydrat (unten)

Abb. 4: Bariumtitanat aus Titanoxid (BET: 6 m$^2$/g) und Ba(OH)$_2$ (kalziniert bei 400°C)

Abb. 5: Spezifischer Widerstand von BaTiO$_3$-Keramiken, gesintert bei 1400 °C, mit unterschiedlichem Kompensationsgrad des Nb mit Al

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3635532 D, D. Hennings, H. Schreinemacher
- US 20040028601 A1
- EP 1415955 A
- EP 0250085 A


**In der Beschreibung aufgeführte Nicht-Patentliteratur**

- *J. Am. Ceram. Soc.,* 2001, vol. 84, 2777-2782
- **A. BEAUGER ; J.C. MUTIN ; J.C. NIEPCE.** *J. Mater. Sci.,* 1983, vol. 18, 3543-3550
- **J.C. NIEPCE ; G. THOMAS.** *Solid State Ionics,* 1990, vol. 43, 69-76
- **D.F. HENNINGS ; B.S. SCHREINEMACHER ; H. SCHREINEMACHER.** *J. Am. Ceram. Soc.,* 2001, vol. 84, 2777-2782
- **J. H. LEE ; H.H. NERSIYAN ; C. W. WON.** *J. Mater. Sci.,* 2004, vol. 39, 1397-1401
- **J. MOON ; J. A. KERCHNER ; H. KARUP ; J. H. ADAIR.** *J. Mater. Res.,* 1999, vol. 14, 425-435
- Reaction kinetics in the barium titanate (BaTiO3 synthesis: influence of the titania crystalline structure and morphology. **FERNANDEZ ; JOSE FRANCISCO ; DURAN, PEDRO ; MOURE, CARLOS.** Materials Science Monographs. 1991, 1973-1982
- Dieses Verfahren wird beispielsweise in Industrial Inorganic Pigments. Wiley-VCH, 2005
- **GOTOR et al.** *J.Europ.Cer.Soc.,* 2003, vol. 23, 505-513
- **G. BUSCA ; V. BUSCAGLIA ; M. LEONI ; P. NANNI.** *Chem. Mater.,* 1994, vol. 6, 955-61
- **D. HENNINGS ; S. SCHREINEMACHER.** *J. Eur. Ceram. Soc.,* 1992, vol. 9, 41-46
- **H.-P. ABICHT ; D. VÖLTZKE ; A. RÖDER ; R. SCHNEIDER ; J. WOLTERSDORF.** *J. Mater. Chem.,* 1997, vol. 7, 487-92
- **F. VALDIVIESO ; M. PIJOLAT ; C. MAGNIER ; M. SOUSTELLE.** *Solid State Ionics,* 1996, vol. 83, 283-96